(19) **Europäisches Patentamt**
**European Patent Office**
**Office européen des brevets**

(11) **EP 4 707 779 A1**

(12) **EUROPEAN PATENT APPLICATION**

(43) Date of publication:
**11.03.2026 Bulletin 2026/11**

(21) Application number: **24199473.0**

(22) Date of filing: **10.09.2024**

(51) International Patent Classification (IPC):
**G01N 21/03** (2006.01)

(52) Cooperative Patent Classification (CPC):
**G01N 21/031**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **EMPA Eidgenössische Material Prüfungs- und Forschungsanstalt**
**8600 Dübendorf Zürich (CH)**

(72) Inventors:
- **Tuzson, Béla**
  **8600 Dübendorf (CH)**
- **Heilmann, Lorenz**
  **8600 Dübendorf (CH)**
- **Emmenegger, Lukas**
  **8600 Dübendorf (CH)**
- **Weitnauer, Alex**
  **8600 Dübendorf (CH)**

(74) Representative: **Haines, Miles John L.S.**
**Haines IP Limited**
**12 Byron Close**
**Bishop's Waltham, Southampton SO32 1RS (GB)**

(54) **CIRCULAR MULTIPASS CELLS AND METHODS OF MANUFACTURE THEREOF**

(57)    A method of manufacturing a segmented circular multipass cell. Starting from a planar substrate (20) with upper and lower surfaces (22, 24) surface structure is applied by one or more of moulding, milling, etching, die-sinking, and machining. A first surface structure forms a plurality of parallel grooves (25) in the planar substrate (20) which subdivide the substrate into segments (12) and allow the substrate (20) to be rolled up into a closed polygonal form by hinging along the grooves (25). A second surface structure provides respective ones of the segments (12) with mirror-shaped surfaces (15) which face inwards when the substrate (20) is rolled up. The mirror-shaped surfaces (15) are processed into high-reflectivity mirrors (14) while the substrate is planar, i.e., before it is rolled up, thereby enabling convential mirror manufacturing processes to be applied, such as deposition of metal or dielectric coatings and polishing.

FIG. 4

**EP 4 707 779 A1**

**Description**

**BACKGROUND OF THE INVENTION**

The invention relates to segmented circular multipass cells and methods of manufacturing segmented circular multipass cells.

When performing laser absorption spectroscopy of a gas, the optical path length (OPL) of the laser beam through the gas determines the volume of gas that is sampled by the laser beam and hence the signal strength. A long OPL is therefore important for enabling absorption lines to be measurable that are either inherently weak or from gases that are only present in trace amounts. To achieve a long OPL with a compact instrument, multipass cells (MPCs) are used. Traditional MPC designs are the Pfund cell (1930s), the White cell (1942) and the Herriott cell (1965). More recently, starting in the 2010s, circular MPCs (C-MPCs) have become popular (see e.g. [1-3]).

A C-MPC is based on a closed-geometry multipass cell. The geometry of the multipass cell can be classified into one of two types. One type is formed by a rotationally symmetrical circular mirror. Another type is formed by a segmented mirror where there are p segments arranged in the shape of a p-sided regular polygon; this type is referred to in the art as a segmented circular multipass cell (SC-MPC). The present invention relates to SC-MPCs. In an SC-MPC, the number of segments is typically at least 6 but may be much higher. The laser beam enters the multipass cell at a non-zero angle, referred to as a coupling angle, relative to the optical axis of the segment mirror where the light beam enters. The mirror optical axis may equivalently be thought of as the segment normal. The light beam then propagates within the multipass cell reflecting from mirror to mirror following a m-star polygram reflection pattern before exiting the cell at the exit point. Most commonly the entry and exit points are the same, which is referred to as a single aperture configuration. However, in some designs the beam entry and exit takes place through respective apertures in different segments, which is referred to as a dual aperture configuration (see e.g. [4]). In an SC-MPC, the OPL can be varied by changing the coupling angle, since the coupling angle defines the nature of the m-star polygram reflection pattern. To avoid beam divergence and minimise beam spot size on the mirror segments, the mirrors can be shaped to provide a confocal configuration. This may be done with spherical or aspherical concave mirrors.

More widespread adoption of C-MPCs, including SC-MPCs, is limited by two constraints relating to fabrication. Firstly, a state-of-the-art multipass cell is fabricated as a monolithic metal structure using single point diamond turning (SPDT). By this approach, it is only possible to manufacture closed cavities with an internal diameter of up to about 20 centimetres. Secondly, the closed-geometry nature of the multipass cell makes it impossible, or at least very difficult, to coat or polish the mirror surfaces. It is thus difficult to fabricate the mirrors with high surface uniformity and high reflectivity, R. The mirrors are typically formed by metal coatings of silver (Ag) or gold (Au) which are deposited electrogalvanically or by sputtering on the surface.

The fact that the R-value for a metallic coating is limited to < 99% means that a certain loss is associated with each reflection, resulting in a total loss for the light that circulates within the cell that is exponentially cumulative with the number of reflections. In turn, this means that the multipass cell can only support a certain finite number of reflections to meet a specified amount of power in the light beam that is output from the SC-MPC. The R-value in combination with the internal diameter of the C-MPC define the maximum possible OPL that is achievable. To date, the maximum OPL achieved in an SC-MPC is around 10 metres with 65 reflections [see, e.g. 4].

Prior Art References:

[1] B. Tuzson et al., "Compact multipass optical cell for laser spectroscopy", Optics Letters 38 (3), 2013.

[2] B. Tuzson et al., "A compact QCL spectrometer for mobile, high-precision methane sensing aboard drones", Atmos. Meas. Tech. 13, 2020.

[3] M. Graf et al., "Compact and lightweight mid-infrared laser spectrometer for balloon-borne water vapor measurements in the UTLS, Atmos. Meas. Tech. 14, 2021.

[4] M. Graf et al., "Compact, circular, and optically stable multipass cell for mobile laser absorption spectroscopy", Optics Letters 3 (11), 2018.

**SUMMARY OF THE INVENTION**

To address the above limitations, according to one aspect of the invention there is provided a method of manufacturing an SC-MPC which commences with a planar substrate and fabricates the mirrors on the planar surface thereby to provide open access to the surface on which the mirrors are formed, thereby enabling straightforward application of standard surface structuring, coating and polishing techniques.

According to a first aspect of the invention, there is provided a method of manufacturing a segmented circular multipass cell, the method comprising:

providing a planar substrate having an upper surface and a lower surface;
applying first surface structure to at least one of the upper surface and the lower surface to subdivide the planar substrate into a plurality of segments;
applying second surface structure on the upper surface to provide respective ones of the segments with mirror-shaped surfaces;
processing the mirror-shaped surfaces on the planar substrate to form mirrors; and
assembling the segments into a closed polygonal geometry with the mirrors facing inwards, thereby to form a segmented circular multipass cell.

The mirrors may be configured such that the segmented circular multipass cell forms a confocal configuration.

The first surface structure may be applied by a process selected from the group of at least one of: moulding, sawing, milling, etching, wire-cutting, die-sinking, and machining. The second surface structure may be applied by a process selected from the group of at least one of: moulding, milling, etching, die-sinking, and machining. The first and second surface structures may both be applied by a process selected from the group of at least one of: moulding, milling, etching, die-sinking, and machining. The machining may for example be electrical discharge machining or laser micromachining. The first and second surface structures can be applied simultaneously (e.g. by roller mould embossing) or one after the other in either order (e.g. by sawing, milling, machining, etching etc.).

For example, if moulding is used, the moulding may comprise softening and embossing the planar substrate. For example, the planar substrate may be softened by heating and embossed, either in one step of hot embossing or in two steps of first softening and then embossing. The embossing could be with a roller or counter-rotating pinch roller pair, or with a die that stamps its imprint onto the planar substrate, as in digital versatile disc (DVD) manufacture.

Said processing to form the mirrors may comprises at least one of: coating the planar substrate to apply at least one mirror coating layer to the mirror-shaped surfaces; polishing the mirror-shaped surfaces; and machining the mirror-shaped surfaces.

For mirror coating, the mirror coating layer(s) may comprise one or more layers of material selected from the group: metal and dielectric. These layers may be deposited by vapour deposition, for example.

In certain embodiments a monolithic construction approach is followed. Said first surface structure reduces the thickness of the planar substrate along a plurality of equally spaced parallel strips to form hinges between adjacent segments. Said assembling comprises rolling up the planar substrate into the closed polygonal geometry, specifically the p-sided regular polygonal shape of an SC-MPC, by bending the hinges. After bending the hinges to form the closed polygonal geometry, optionally the hinges may be processed to render them inflexible so that the segments are fixed in position in the closed polygonal geometry. This can be done by applying a bonding material to the hinged grooves or welding them, for example. A supporting frame may be provided so that the method further comprises securing the rolled-up substrate to the supporting frame to maintain the structure in its closed polygonal geometry.

In the monolithic construction approach, the order in which the substrate is surface structured to form the grooves and the mirror-shaped surfaces is carried out can be selected as desired. Namely, the mirror-shaped surfaces may be formed before or after thinning the planar substrate to form the hinges or simultaneously in the case of moulding or roller hot embossing.

In the monolithic construction approach, the hinges are formed by structuring at least one of the upper and lower surfaces of the planar substrate to cause local thinning. In some embodiments, the thinning comprises forming grooves on the upper surface of the planar substrate. The grooves in the upper surface have a geometry, taking account of parameters such as groove width and groove sidewall angle, which allows the planar substrate to be folded into a segmented circular multipass cell. For example, if the groove is a V-groove with a groove base length of zero, then the groove angle must be greater than or equal to 360°/n, where 'n' is the number of segments. In other embodiments, the thinning comprises forming grooves on the lower surface of the planar substrate. In still further embodiments, the thinning comprises forming pairs of opposing grooves on the upper and lower surfaces of the planar substrate respectively.

In the monolithic construction approach, it may also be convenient to use a supporting frame to which the substrate is secured in position to form the segmented circular multipass cell. As mentioned above, the securing may be by fastening, e.g., with screws, by adhesive bonding, by welding or by any other suitable method. Alternatively, the substrate after being rolled up into a closed geometry may be self-supporting in which case a separate frame can be dispensed with. Specifically, after bending the substrate along the hinges into the closed geometry, the hinges are further processed to render them inflexible so that the segments are fixed in position in the closed geometry. Suitable processing techniques include applying bonding material to the hinges and welding the hinges.

In other embodiments a non-monolithic construction approach is followed. The method further comprises separating the segments into structurally separate pieces prior to said assembling, wherein said assembling comprises individually securing the separate pieces to a supporting frame. The securing may be by fastening, e.g., with screws, by adhesive bonding, by welding or by any other suitable method. An advantage of the non-monolithic construction is that the individual segment pieces can each be tested prior to their use in assembly, i.e., prior to securing them to the external frame. That way, any segments, in particular the associated mirrors, that do not meet specification can be discarded. Another advantage of the non-monolithic construction is that the individual segment pieces can be used as generic pieces in segmented circular multipass cells with different numbers of segments.

A single array of mirrors is sufficient to manufacture a segmented circular multipass cell. However, multiple rows of mirrors may be formed on the same planar substrate and each row can then be diced out or otherwise separated before folding each row into a closed loop to form a segmented circular multipass cell, i.e multiple segmented circular multipass cells can be produced from the same planar substrate. Alternatively, the multiple rows can be used to form stacked structures, i.e. multi-layer multipass cells. In both cases, multiple segmented circular multipass cells can be produced from the same planar substrate.

Fabricating a row of mirrors may involve any combination of processing steps. For example, the upper suface for formation of the mirrors may be processed initially by machining a desired mirror profile, such as a concave shape, into the upper surface. Alternatively, the required mirror profile structure can be realized by embossing, such as roller hot embossing. The machined surface may be smoothed further by polishing. The machined and polished surface for the mirrors may then have one or more layers of a dielectric material (multi-layer interference coating) and/or a metal material deposited on top to complete the mirrors.

The first aspect of the invention extends to cover segmented circular multipass cells manufactured according to the method.

According to a second aspect of the invention, there is provided a segmented circular multipass cell comprising:

a plurality of p segments arranged in the form of a p-sided polygon;
an entry aperture arranged in one of the segments through which a light beam can be coupled into the multipass cell at a coupling angle such that the light beam subsequently traverses the multipass cell;
an exit aperture arranged in one of the segments through which the light beam exits the multipass cell after traversal of the multipass cell; and
a plurality of mirrors arranged on the segments that are not associated with the entry and exit apertures,
wherein a majority of the mirrors have a conventional alignment in which the mirrors conform to the shape of a p-sided regular polygon, whereas at least two of the mirrors have a tilted alignment, being tilted at a tilt angle with respect to the conventional alignment, said mirrors being referred to respectively as un-tilted and tilted mirrors, and
wherein the segmented circular multipass cell is configured such that the light beam initially follows an m-star polygram reflection pattern defined by the coupling angle at which the light beam is coupled into the multipass cell through the entry aperture and, subsequently, each time the light beam is reflected from a tilted mirror, the m-star polygram reflection pattern changes to one with a different coupling angle.

According to the design approach with two or more tilted mirrors, i.e., mirrors tilted away from their conventional optical axis, i.e., normal to the polygon side, by a certain tilt angle, the beam path can be specified as follows. After having been coupled into the multipass cell through the entry aperture, the light beam follows a $m_1$-star polygram reflection pattern by reflection from un-tilted ones of the mirrors until the light beam is incident on a first one of the tilted mirrors, whereupon it is reflected out of the $m_1$-star polygram reflection pattern into a $m_2$-star polygram reflection pattern, wherein the tilt angle of the first tilted mirror is selected to reflect the light beam across the multipass cell onto a different one of the mirrors compared to if the light beam had been incident on an un-tilted mirror and had continued to follow the $m_1$-star polygram reflection pattern, the $m_2$-star polygram reflection pattern thereby having a different coupling angle to that of the $m_1$-star polygram reflection pattern. Subsequently, the light beam after reflection from the first tilted mirror follows the $m_2$-star polygram reflection pattern by reflection from un-tilted ones of the mirrors until the light beam is incident on a second one of the tilted mirrors, whereupon it is reflected out of the $m_2$-star polygram reflection pattern into a third ($m_3$-star) polygram reflection pattern, wherein the tilt angle of the second tilted mirror is selected to reflect the light beam across the multipass cell onto a different one of the mirrors compared to if the light beam had been incident on an un-tilted mirror and had continued to follow the $m_2$-star polygram reflection pattern, the $m_3$-star polygram reflection pattern thereby having a different coupling angle to that of the $m_2$-star polygram reflection pattern.

In certain embodiments, a third tilted mirror is provided. More specifically, the light beam after reflection from the second tilted mirror follows the $m_3$-star polygram reflection pattern by reflection from un-tilted ones of the mirrors until the light beam is incident on a third one of the tilted mirrors, whereupon it is reflected out of the $m_3$-star polygram reflection pattern into a fourth ($m_4$-star) polygram reflection pattern, wherein the tilt angle of the third tilted mirror is selected to reflect the light beam across the multipass cell onto a different one of the mirrors compared to if the light beam had been incident on an un-tilted mirror and had continued to follow the $m_3$-star polygram reflection pattern, the $m_4$-star polygram reflection pattern thereby having a different coupling angle to that of the $m_3$-star polygram reflection pattern.

Fourth and subsequent tilted mirrors can also be provided analogously. Specifically, the number of tilted mirrors can be selected from the group: one, two, three, four, five and six. Although the $m_n$-star) polygram reflection pattern, i.e., the nth m-star polygram, will always be different from the $m_{n-1}$-star polygram reflection pattern owing to the change in coupling angle, it may be that, for example, the $m_{n+1}$-star polygram reflection pattern is the same as the $m_{n-1}$-star polygram reflection pattern. In other words, the respective coupling angles of two nonconsecutive reflection patterns may become equal.

In certain embodiments, the cell is configured such that the light beam after reflection from the second tilted mirror follows the $m_3$-star polygram reflection pattern by reflection from un-tilted ones of the mirrors until the light beam is incident for a second time on the first tilted mirror, whereupon it is reflected out of the $m_3$-star polygram reflection pattern into a fourth ($m_4$-star) polygram reflection pattern, the $m_4$-star polygram reflection pattern having a different coupling angle to that of the $m_3$-star polygram reflection pattern. Further, the cell can also be configured such that the light beam after reflection a second time from the first tilted mirror follows the $m_4$-star polygram reflection pattern by reflection from un-tilted ones of the mirrors until the light beam is incident for a second time on the second tilted mirror, whereupon it is reflected out of the $m_4$-star polygram reflection pattern into a fifth ($m_5$-star) polygram reflection pattern. In some embodiments, this may continue with third, fourth etc. beam encounters on the first and second tilted mirrors, each encounter causing the polygram reflection pattern to change. It is therefore possible to design the cell such that the number of polygram reflection patterns followed by the light beam within the cell is greater, even much greater, than the number of tilted mirrors plus one, while the mulitpass cell has the same footprint such as a conventional SC-MPC.

In certain embodiments, each tilted mirror has a tilt angle to cause the light beam to be reflected onto an opposed mirror that is a nearest neighbour (+/-1 segment deflection) or next nearest neighbour (+/-2 segment deflection) to the mirror the light beam would have been directed to had the existing polygram reflection pattern been continued with. However, the deflection can also be larger than $\pm 1$ or $\pm 2$ segments, especially for higher values of the initial coupling angle into the cell, e.g., $\pm 3$, $\pm 4$, $\pm 5$, $\pm 6$, $\pm 7$, $\pm 8$, $\pm 9$ or $\pm 10$ segments.

The segmented circular multipass cell as manufactured according to the above planar substrate method (with or without tilted mirrors) of the first aspect of the invention and/or according to the above tilted mirror designs of the second aspect of the invention can have a single aperture or dual aperture design. In a dual aperture design, the entry and exit apertures are different apertures arranged in different ones of the segments. In a single aperture design, the entry and exit apertures are one and the same aperture arranged on the same segment. Namely, after having traversed the multipass cell, the light beam exits either through said aperture, i.e., the aperture through which it entered the multipass cell, or a further aperture arranged in a different segment. Thus, in a single aperture design, there will be a plurality of p - 1 mirrors, i.e., one fewer than the number of sides of the polygon, whereas in a dual aperture design there will be a plurality of p - 2 mirrors, i.e., two fewer than the number of sides of the polygon. Structurally, the planar substrate may have the same number of segments as the polygon in which case the, or both, apertures are formed by fabricating holes or windows in the planar substrate. Alternatively, the number of structural segments present in the substrate may be reduced by one or two to leave a gap or two gaps for the apertures.

In certain embodiments, the mirrors are configured such that the segmented circular multipass cell is confocal.

In certain embodiments, some or all of the tilted mirrors are mounted so as to have an adjustable tilt angle.

The segmented circular multipass cell according to the second aspect of the invention with one or more tilted mirrors may be manufactured according to the planar substrate approach of the first aspect of the invention. Alternatively, segmented circular multipass cell according to the second aspect of the invention with one or more tilted mirrors may be manufactured according to conventional methods, such as using SPDT as described in the introduction.

## BRIEF DESCRIPTION OF THE DRAWINGS

This invention will now be further described, by way of example only, with reference to the accompanying drawings.

Figure 1 is a schematic cross-section of an SC-MPC of conventional design, which can be fabricated according to methods embodying the invention.

Figure 2 is a schematic side view of a planar substrate.

Figure 3 is a schematic side view of the planar substrate after surface structuring the upper surface to form a row of concave mirror-shaped surfaces.

Figure 4 is a schematic side view of the planar substrate after surface structuring the upper surface to form grooves between the mirror-shaped surfaces.

Figure 5 is a schematic side view of the planar substrate showing deposition of metal or dielectric material (arrows) onto the mirror-shaped surfaces to form high-reflectivity mirrors.

Figure 6 is a schematic side view of one of the mirrors with surface coating layers deposited on the mirror surface that was formed by the surface structuring.

Figure 7 is a schematic plan view of the structure of Figure 5.

Figure 8 shows the substrate of Figure 5 or 7 rolled up into a polygonal form by hinging along the grooves to form the SC-MPC.

Figure 9 shows the SC-MPC of Figure 8 secured in an external frame.

Figure 10 is a schematic plan view to be compared with Figure 7 showing an alternative way of fabricating the mirror surfaces as a continuous strip.

Figure 11 is a schematic plan view of a larger substrate which allows multiple rows of mirrors to be fabricated for forming multiple SC-MPCs on a single substrate.

Figures 12A to 12F show alternative groove structures for forming the hinges.

Figure 13 is a schematic side view of a roller moulding process that surface structures the upper surface of the planar substrate simultaneously to form both grooves and mirror-shaped surfaces.

Figure 14 shows an SC-MPC according to an alternative embodiment with structurally separate segments secured to a frame.

Figure 15 is a schematic cross-section of an SC-MPC of a single aperture design with two tilted mirrors according to an embodiment of the invention, which can be fabricated according to methods embodying the invention.

Figure 16 is a schematic cross-section of an SC-MPC of a dual aperture design with two tilted mirrors according to an embodiment of the invention, which can be fabricated according to methods embodying the invention.

Figure 17 is a schematic cross-section of an SC-MPC of a single aperture design with three tilted mirrors according to an embodiment of the invention, which can be fabricated according to methods embodying the invention.

Figure 18A is a schematic perspective view of a planar substrate after groove and mirror formation for an SC-MPC according to an embodiment with a tilted mirror segment.

Figure 18B is a schematic perspective view corresponding to, and for comparison with, Figure 18A showing a conventional SC-MPC of the type shown in Figure 1, i.e., without a tilted mirror segment.

## DETAILED DESCRIPTION

In this document, reference to specific numerical values of scalar quantities, for example as range end points, are to be taken as exact values and are not to be rounded whether that be by significant figures, number of decimal places or otherwise.

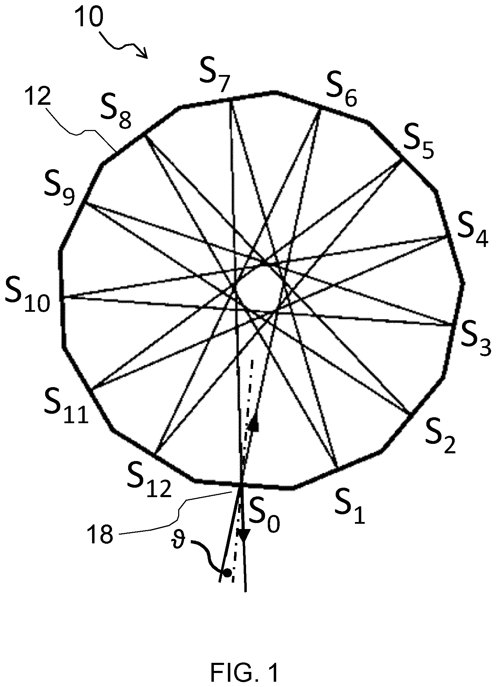

Figure 1 is a schematic cross-section of an SC-MPC 10 of conventional design with thirteen segments 12, which can be fabricated according to methods embodying the invention. The SC-MPC 10 has a single aperture configuration, which means that there is a single aperture 18 through which the light beam enters and exits the cell. Although each segment 12 is illustrated schematically as planar, it will be understood the segments, or more specifically their mirrors 14, will likely be concave to provide a confocal cell. A sampling beam, typically a laser beam, is input at an angle $\vartheta$ to the segment normal and exits at an angle $-\vartheta$. Another known type of SC-MPC has a dual aperture configuration, which means the beam enters and exits the cell at separate apertures, and methods embodying the invention can also be applied to fabricate this type of SC-MPC. The coupling angle defines the reflection pattern by the rules of a m-star polygram. An m-star polygram reflection pattern is followed provided that the coupling angle is such that one of the two segments neighbouring the centreline is the first of the pattern. The coupling angle defines the m of the m-star polygram pattern that is traversed by the beam until it exits the cell. The illustrated SC-MPC has 13 segments $s_i$ which are labelled S0 to S12, so that the beam path is a 13-star polygram. The total number of segments is denoted by $p$ which is an odd number. Prime numbers are of particular interest. Other example segment numbers include 7, 9, 11, 13, 15, 17, 19, 21, 23, 25, 27, 29, 31, 37, 41, 43, 47, 53, 59, 61, 67, 71, 73, 79, 83, 89, 97, 101, 103, 107, 109, 113, 127, 131, 137, 139, 149, 151, 157, 163, 167, 173, 179, 181, 191, 193, 197 and 199 ... or more. An SC-MPC is often designed with a confocal cell arrangement in which the segments, or more precisely their mirrors, have a common radius of curvature $R_s$ that is equal to the cell diameter $d = 2 \cdot R_c$. With a symmetrical confocal arrangement, the beam spot size, i.e., cross-section, is smallest on the segment, i.e., at the reflection surface of the mirror. If the input light beam, typically a laser beam, is matched to the cell mode, then the beam is invariant upon reflection at the mirrors.

In an SC-MPC cell, the beam propagates to a segment $s_i$ according to the following recurrence relation:

$$s_{i+1} = \begin{cases} s_i + q, & \text{if } s_{i+1} < p \\ s_i + q - p, & \text{if } s_{i+1} \geq p \end{cases} \qquad (1)$$

or simply

$$s_{i+1} = (s_i + q) \bmod p \qquad (2)$$

The value for q is defined by the selection of the first illuminated segment and the coupling angle $\vartheta$ which is given by:

$$\vartheta = \frac{\pi}{2}\left(1 - \frac{2q}{p}\right) \qquad (3)$$

which fully determines the reflection pattern within the cell. The optical path length (OPL) in the SC-MPC is given by:

$$\text{OPL} = p \cdot d \cos(\vartheta(q)) \qquad (4)$$

Where d is the cell diameter. It is common to operate an SC-MPC in a near-normal configuration which provides the highest density pattern, this being achieved by coupling to segments closest to the centre line. In this near-normal configuration $\cos(\vartheta) \approx 1$ so the OPL is closely approximated the multiple of the total number of segments and the cell diameter $p \cdot d$.

The condition for the near-normal configuration can be expressed by:

$$q_{0,normal} = \left|\frac{p}{2}\right| \qquad (5)$$

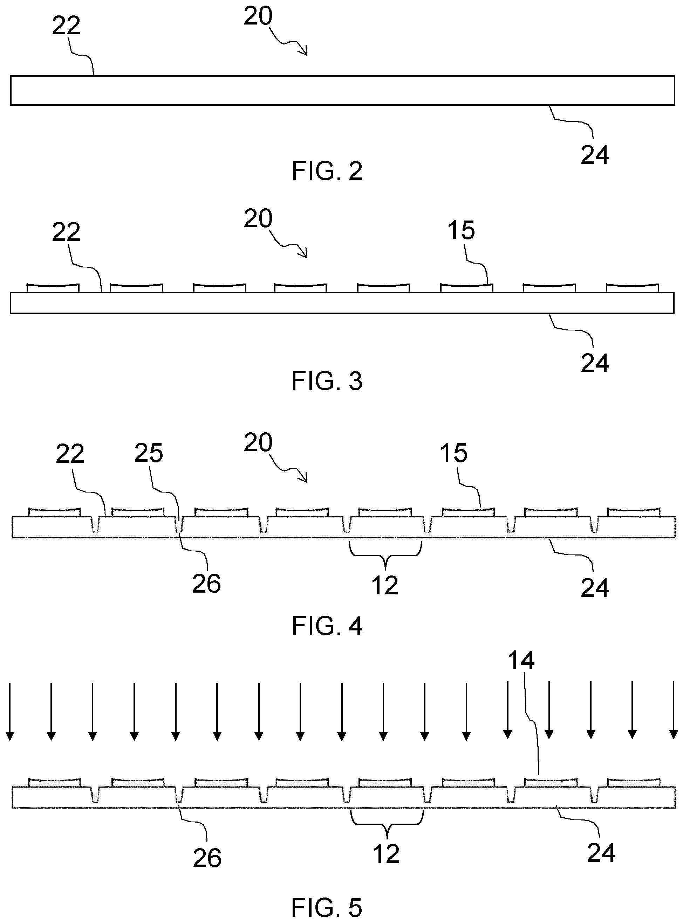

A method embodying the invention for manufacturing an SC-MPC of the type described above with reference to Figure 1 is now described with reference to Figures 2 to 6 using the example of an eight segment SC-MPC.

Figure 2 is a schematic side view of a planar substrate 20 which provides the starting point for the fabrication. The planar substrate 20 has an upper surface 22 and a lower surface 24.

Figure 3 is a schematic side view of the planar substrate 20 after surface structuring the upper surface 22 of the planar substrate 20 to form a row of concave surfaces 15 that are shaped in the profile specified for the mirrors. The surface profile may be selected to form concave mirrors for a confocal configuration of the cell.

Figure 4 is a schematic side view of the planar substrate 20 after formation of parallel grooves 25 in the upper surface 22 of the planar substrate 20 between the mirror-shaped surfaces 15. It is noted that the grooves 25 may be formed before or after mirror-shaped surfaces 15, or simultaneously in the case of moulding or embossing. Moreover, as described below, in alternative embodiments, the grooves 25 may be formed instead in the lower surface 24 or in both the upper and lower surfaces 22, 24.

Figure 5 is a schematic side view of the planar substrate 20 showing vapour deposition of metal or dielectric material (arrows) onto the concave mirror-shaped surfaces 15 to form high-reflectivity mirrors 14.

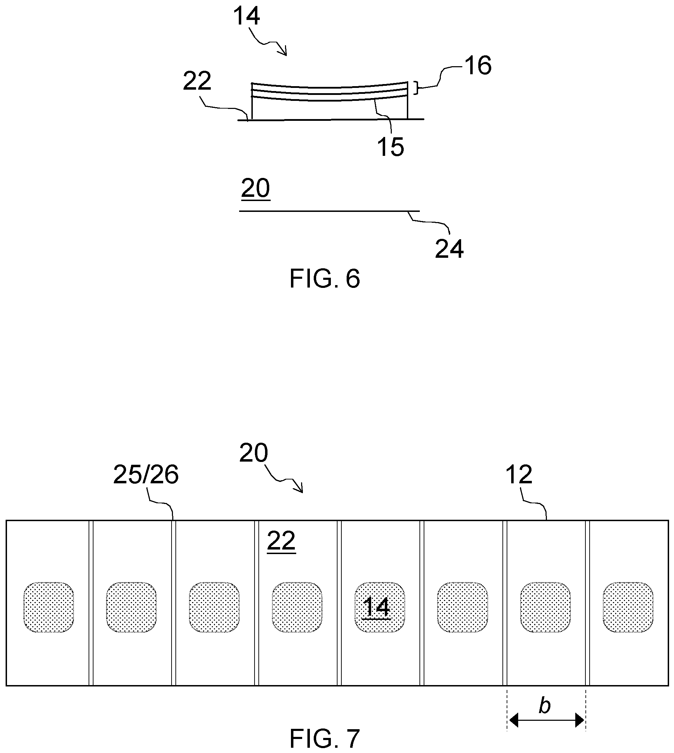

Figure 6 is a schematic side view of one of the mirrors 14 with surface coating layers 16 (two shown by way of example) deposited on the mirror surface 15 that was formed by the surface structuring (Figure 3).

Figure 7 is a schematic plan view of the structure of Figure 5 showing how the substrate 20 has been divided into rectangular tiles of breadth b by the grooves 25, each adjacent tile bearing a mirror 14.

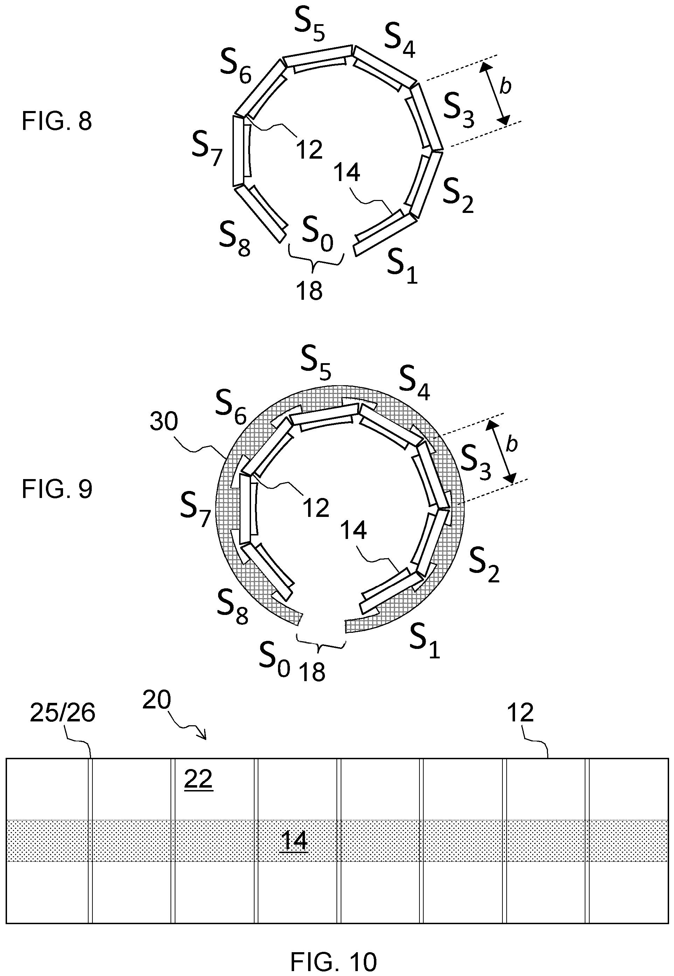

Figure 8 shows the substrate after it has been rolled up by bending of the thinned substrate portions at the grooves into the form of a p-sided regular polygon, where *p* is the number of tiles. The planar substrate 20 is rolled up with the mirrors 14 facing the inside of the polygon, so that the tiles become the segments of an SC-MPC. In this example, the cell is nonagonal, i.e., *p* = 9. The mirror-bearing SC-MPC segments 12 are labelled S1 to S8, whereas the segment S0 accommodates the aperture 18, this being a single aperture design. In a dual aperture design, two of the segments would be apertures and the remaining segments would bear mirrors.

The hinge bending stiffness, i.e., the stiffness along the groove axis of each thinned portion of the substrate, is an important property both in absolute value and relative to the bending stiffness of the tiles where the substrate has full thickness. The hinge bending stiffness along each groove axis needs to be sufficiently low to permit the angle of bending to be accommodated that is needed to form the p-sided regular polygon freely and without risk of fracture. Moreover, the ratio of the bending stiffness of the tiles relative to that of the thinned portions needs to be sufficiently large that the tiles are unstrained or negligibly strained so that distortion of the mirror surfaces does not occur or is minimal. Moreover, any coating layers for the mirrors that are formed on the tiles should not be damaged by the bending. Substrate materials suitable for a monolithic construction need to accommodate the bending along the grooves. These include various metals, for example aluminium and stainless steel, as well as plastics materials. The thickness of the substrate where it is thinned by the grooves will depend on the material used, but typical values are in the range 50-300 micrometres, more especially 100-200 micrometres.

Figure 9 shows the SC-MPC of Figure 8 secured in an external frame, which is an option to further stabilize the structure formed by the rolled-up substrate.

Figure 10 is a schematic plan view to be compared with Figure 7 showing an alternative way of fabricating the mirror surfaces as a continuous strip rather than individually. This may be more efficient for mirror formation processes based on deposition of one or more layers and/or etching steps.

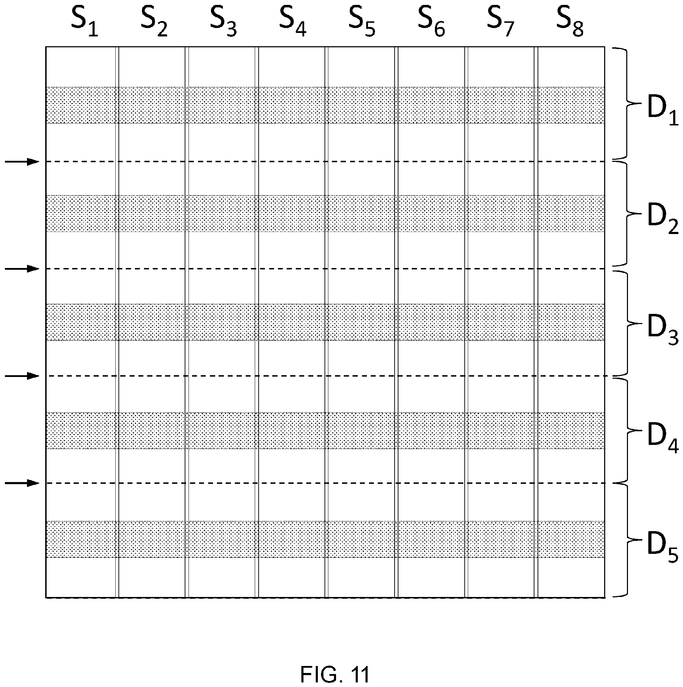

Figure 11 is a schematic plan view of a larger substrate which allows multiple rows of mirrors to be fabricated for forming multiple SC-MPCs on a single substrate. Each mirror row can be diced out of the substrate as a strip along the dotted lines, with the schematic illustration showing five mirror rows for making five SC-MPC devices, labelled D1 to D5.

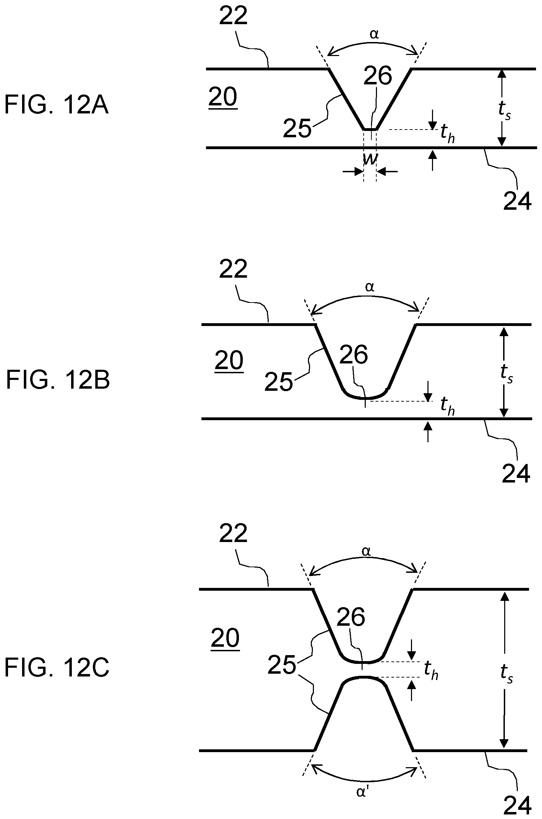

Figures 12A to 12F show different alternatives for forming the intersegment hinges by way of example. The substrate 20 has a thickness $t_s$ and is thinned by grooves 25 to form hinges 26 of thickness $t_{sh}$ and width w.

Figure 12A shows a hinge 26 formed by a V-shaped groove 25 in the upper surface 22 of the substrate 20.

Figure 12B shows a hinge 26 formed by a U-shaped groove 25 in the upper surface 22 of the substrate 20.

Figure 12C shows a hinge 26 formed by an opposed pair of U-grooves 25 formed respectively in the upper and lower surfaces 22, 24 of the substrate 20. Alternatively, V-grooves could be used.

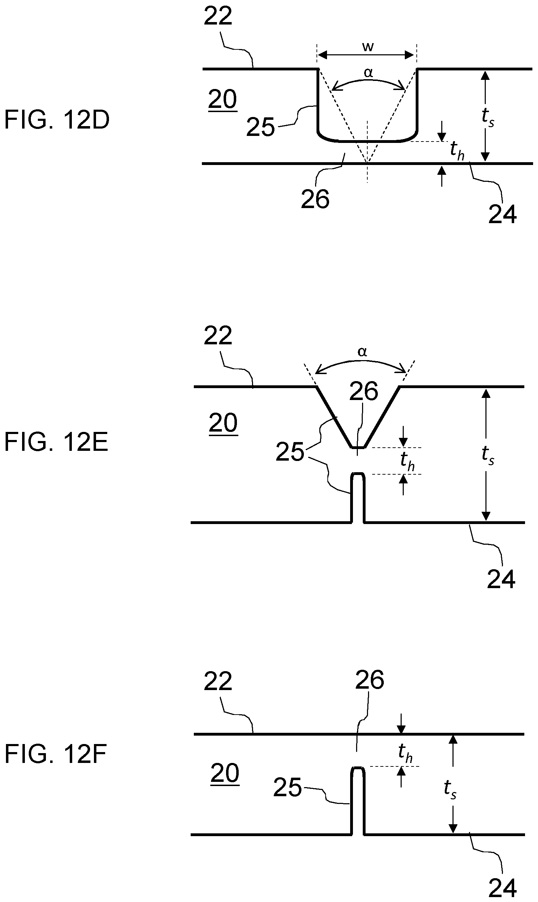

Figure 12D shows a hinge 26 formed by a rectangular groove 25 of width w in the upper surface 22 of the substrate 20, which would be a profile typical of a circular saw cut or a milled groove. The thinned portion of the planar substrate 20 thus has a width w. In a variant of this design, another rectangular groove could be formed in the lower surface 24.

Figure 12E shows a hinge 26 formed by a V-shaped groove in the upper surface 22 and a slot groove on the lower surface 24.

Figure 12F shows a hinge 26 formed by a slot groove 25 on the lower surface 24.

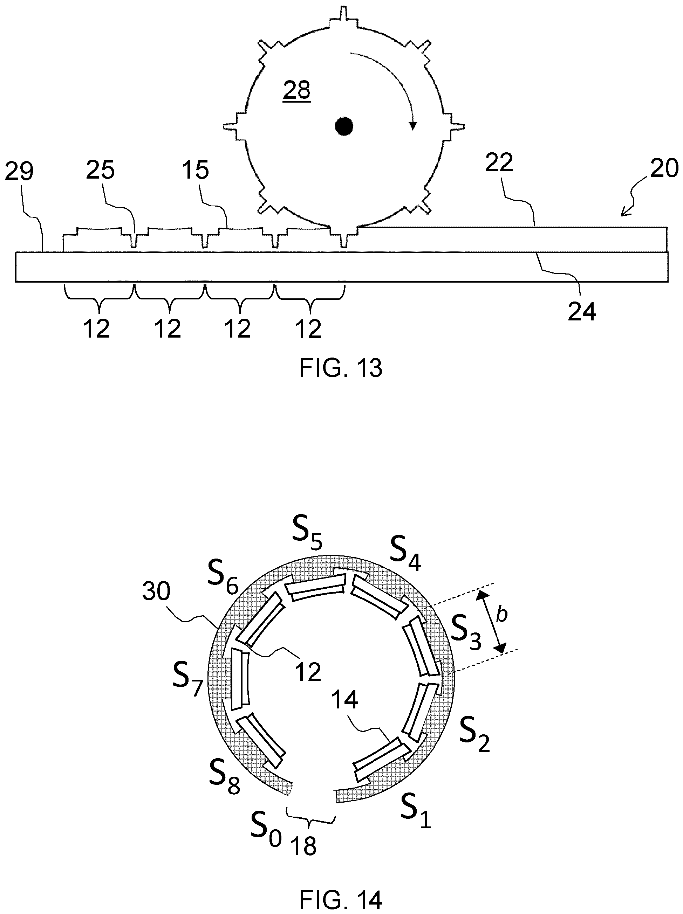

Figure 13 is a schematic side view of a roller moulding process that surface structures the upper surface of the planar substrate simultaneously to form both grooves and mirror-shaped surfaces. Roller embossing processes are described in the review article:

Deshmukh, Swarup & Goswami, Arjyajyoti. (2022). Current innovations in roller embossing-a comprehensive review. Microsystem Technologies. 28. 1-38. 10.1007/s00542-022-05265-0.

The full contents of this review article are incorporated herein by reference.

As schematically illustrated in Figure 13, a roller 28 is rotated (as shown by the arrow) to press tangentially onto the upper surface 22 of the planar substrate 20 and thereby form simultaneously the mirror-forming shaped surfaces 15 and the grooves 25. Typically, the substrate material for roller embossing will be a polymer. Suitable polymers are Polycarbonate (PC), PMMA (Polymethyl methacrylate), PE (Polyethylene), PS (Polystyrene), PET (polyethylene-terephthalate), and COC (cyclic-olefin-copolymer). The roller surface structure is thus a negative of the surface structure to be formed on the substrate surface. The planar substrate 20 lies with its lower surface in contact with a planar hot plate 29 (similar to Deshmukh et al at Figure 5a). Instead of, or in addition to, using a hot plate, the roller 28 may be heated so that it softens the substrate upper surface 22 on contact. Alternatively, a non-contact radiative heater may be arranged above and/or below the substrate.

Segments 12 are thus formed one at a time by feeding the substrate 20 through the roller 28. A counter-rotating roller may be arranged under the planar substrate 20 to support its lower surface 24, thereby forming a pinch roller pair with the illustrated roller 28 (see e.g. Deshmukh et al at Figure 1b). The counter-roller may have a smooth surface or may itself have surface structure to form a groove on the lower surface (e.g. to form the structure shown in Figure 12C, 12E or 12F). Another option is for two counter-rotating rollers to be used in combination with the embossing roller as shown in Figure 10 of Deshmukh et al. A still further option is for the substrate 20 to be supported on its lower surface 24 by a plurality of rollers which may be arranged in a planar way or to follow a curve (see e.g. Deshmukh et al at Fig. 1c). Other more complex arrangements as disclosed in Deshmukh et al - for example in Figure 12 thereof - are also possible. With a roller embossing process, it will be understood with reference to Deshmukh et al that the planar substrate may be flexible, e.g., a flexible polymer sheet. Moreover, it is possible that the planar substrate is a combination of a base substrate to whose upper surface a deformable resin is applied shortly before the substrate comes into contact with the embossing roller (see Deshmukh et al at Figure 1c). The resin is then hardened after the embossing either naturally through cooling or by some active process such as curing with light.

**Fabrication Example I (Monolithic Construction)**

1. Start with a sheet of material that is a few millimeters thick made of a flexible material to accommodate the later bending to form the monolithic cell, e.g., aluminum, steel alloys, polymers.

2. Cut a strip from the sheet to provide a planar substrate, e.g. using:

   a. wire erosion or

   b. laser ablation
   (which both have excellent precision)

3. Cut equally spaced grooves transversely across the strip using the same method as in 2 above to provide bending lines.

4. Perform a rough machining of the upper surface of the strip to provide the approximate surface shape for what will become the special tilted segments, e.g., using

   a. milling
   b. routing
   c. turning
   d. laser ablation

5. Coat the upper surface of the strip with nickel phosphor to provide an optical grade surface finish.

6. Perform optical grade surface machining to get a spherical mirror surface, e.g. using a. diamond turning

7. Optical grade surface finish, e.g. using

   a. polishing
   b. lapping
   c. grinding

8. Deposit an adhesion layer (e.g., Ti or Cr) for the dielectric coatings for mirror formation, if necessary

9. Add dielectric coating to provide a high reflectivity mirror surface. This is strongly wavelength specific, i.e. less broadband than metallic coatings, but will provide a much higher reflectivity, which becomes increasingly important as the number of reflections within the cell increases, e.g., with several hundred reflections inside the cell, e.g., 200 to 400.

10. Bend strip into shape by bending at the grooves and fix the bent substrate into a circular supporting frame.

**Fabrication Example !! (non-monolithic construction)**

1. Follow the steps 1 to 9 from Example I to manufacture mirrors with the appropriate dimensions and mirror curvature, including the tilted mirrors as well, made of any of the following materials:

    a. glass, optical crystals

    b. ceramics

    c. plastics (moulded optics)

2. Cut through the strip transversely at equal spacings using the same method as in 2 above to provide separate pieces, one for each segment.

3. Precision place and glue the mirrors onto the segment pieces

4. Fix the segment pieces with their mirrors individually into a circular frame.

**Fabrication Example III (hot-embossing)**

1. Precision machine a roller mould (negative) to the required dimensions and surface specifications.

2. Mount a polymer sheet (e.g. Polycarbonate, PMMA, Polyethylene, PET, PEEK) on a heatable plate.

3. Roll polymer sheet under roller mould while locally heating the polymer, imprinting the mould structure onto the polymer.

4. Optional (UV-assisted roll-to-plate hot embossing): For more accurate de-embossing (i.e. separating the roller mould from the embossed polymer surface) and thus higher precision a UV-curable resin can be applied and UV light used before de-embossing.

5. Application of dielectric coating for high reflectivity.

6. Mount into the circular frame of multipass cell.

Figure 14 shows an SC-MPC fabricated according to a variant of the manufacturing method. Instead of forming grooves in the substrate so that the substrate can be folded as a monolithic structure into a closed loop, each mirror is cut out of the substrate to form a segment for the SC-MPC. The individual, free-standing segments are then individually secured to a supporting frame 30 to form the SC-MPC. In the illustrated example, the cell is nonagonal, i.e., p = 9. The mirror-bearing SC-MPC segments 12 are labelled S1 to S8, whereas the aperture side of the polygon is labelled S0, this being a single aperture design.

In summary of the above, by forming the cell mirrors on a flat surface as provided by a planar substrate, the process steps for forming the mirrors can be carried out using well developed precision techniques available from the semiconductor industry and the optical component manufacturing industry, such as epitaxial layer deposition of dielectric and metal layers, polishing, etching (wet or dry) and so forth, as well as moulding processes such as roller embossing. After mirror fabrication on the planar substrate, the multipass cell is formed by arranging the mirrors into the desired p-sided regular polygonal shape. In a monolithic construction, the substrate is made flexible by thinning the substrate along a plurality of equally spaced parallel strips so that the substrate becomes foldable along these strips. This allows the planar substrate to be rolled up to form the SC-MPC with each segment forming one side of a polygon. The thinning may be performed before or after mirror fabrication or simultaneously in the case of moulding or embossing. In a non-monolithic construction, after mirror fabrication, the substrate is diced up into structurally separate pieces and these pieces are then individually secured to a frame to form the segments of an SC-MPC.

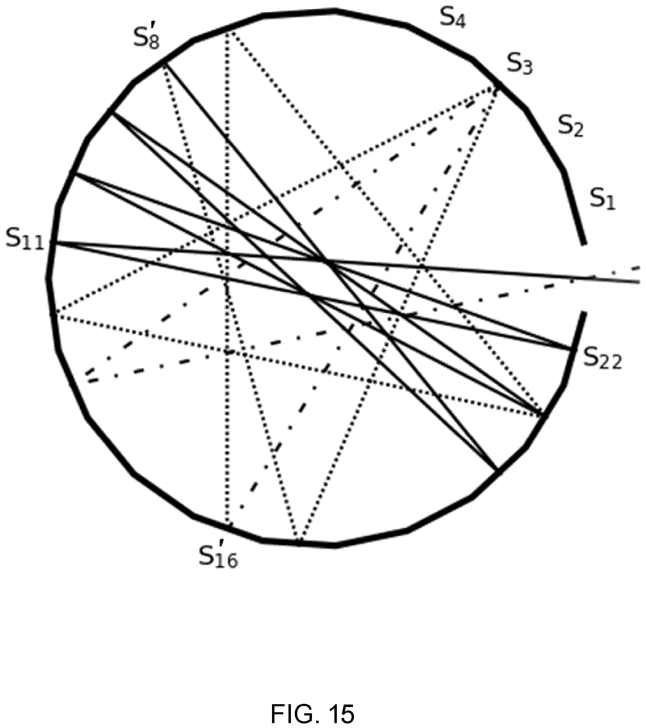

Figures 15 to 17 are schematic cross-sections of an SC-MPC 10 of a design according to three specific examples embodying the invention. The SC-MPC designs according to these examples can be fabricated according to methods embodying the invention as described above. In particular, the manufacturing methods embodying the invention allow these SC-MPC designs to be realized in mass production .

The new idea behind the design approach adopted for the embodiments of Figures 15 to 17 is to modify two or more of the mirrors of a standard design SC-MPC so that they are tilted away from their conventional optical axis, i.e.,

normal to the polygon side, by a certain tilt angle. The beam path of a $m_1$-star polygram is followed initially after beam entry, which is at segment S0 in these embodiments, but is then disrupted once the beam is incident on the first tilted mirror segment, which is at segment S8 in these embodiments. The first tilted mirror has a tilt angle that does not reflect the incident beam to follow the beam path of the $m_1$-star polygram but is tilted to reflect the incident beam instead onto a different mirror segment in a beam path that when reflected from the receiving mirror segment represents a reflection pattern that is also supported by the cell, which is denoted as the $m_2$-star polygram. The beam path then follows the $m_2$-star polygram reflection pattern until the beam is incident on a second tilted mirror, which is at segment S16 in these embodiments, which changes the reflection pattern again into what is denoted as the $m_3$-star polygram reflection pattern. The example SC-MPCs shown in Figures 15 to 17 have in common that $p = 23$ to form a 23-sided regular polygon. Similar to Figure 1, in Figures 15 to 17 the segments are illustrated schematically as planar, whereas it will be understood the segments, or more specifically their mirrors, will most likely be concave mirrors to provide a confocal cell. The concave mirrors may be spherical or aspherical, on-axis or off-axis. With a confocal arrangement, the beam spot size, i.e., cross-section, is smallest on the segment, i.e., at the reflection surface of the mirror. In a confocal cell, the segments have a common radius of curvature $R_s$ that is equal to the cell diameter $d = 2 \cdot R_C$.

Figure 15 is a schematic cross-section of an SC-MPC of a single aperture design with two tilted mirrors according to an embodiment of the invention, which can be fabricated according to methods embodying the invention. In the design of Figure 15, the input beam is injected at segment S0, traverses the cell multiple times by reflection from mirror segments S11, S22, S10, S21, S9 and S20 (following the reflection pattern shown with the solid lines) and is then from S20 incident on S8 where the first tilted mirror is situated. Instead of the mirror at S8 reflecting the beam onto mirror segment S19, as it would do for a non-tilted mirror, it reflects the beam onto the segment S17, i.e., the next nearest neighbour to S19. Via reflections from un-tilted mirrors the beam (dotted line) then proceeds through segments S3, S12, S21 and S7 which are all un-tilted mirrors, and then arrives at S16, which is the second tilted mirror. Instead of reflecting the beam onto S2 (which would be the progression of the polygram), the second tilted mirror at S16 reflects the beam onto segment S3 (dot-dashed line) into an $m_3$-star polygram reflection pattern, which is incident from segment S3 onto S13 and from S13 to S0, which is the apertured segment, thereby representing the beam exit from the cell.

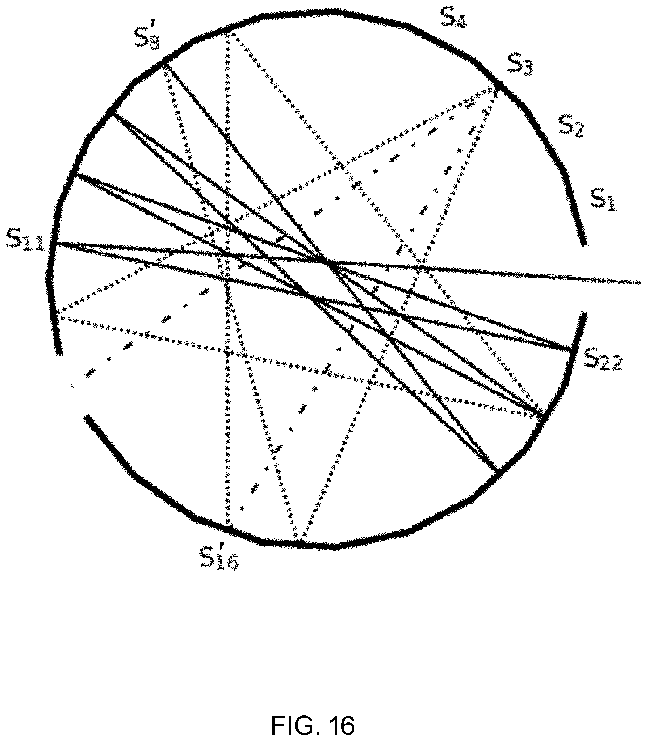

Figure 16 is a schematic cross-section of an SC-MPC of a dual aperture design with two tilted mirrors according to an embodiment of the invention, which can be fabricated according to methods embodying the invention.

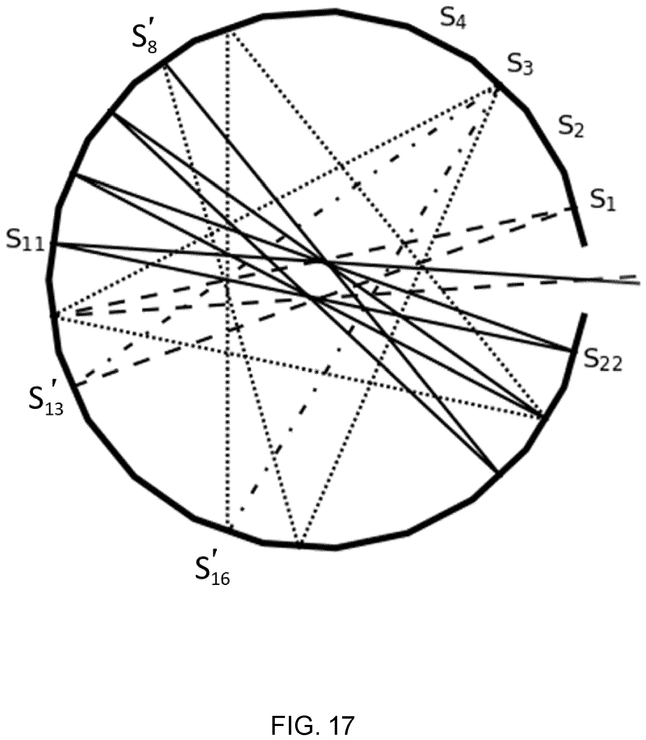

Figure 17 is a schematic cross-section of an SC-MPC of a single aperture design with three tilted mirrors according to an embodiment of the invention, which can be fabricated according to methods embodying the invention.

In each of Figures 15 to 17, the beam path is shown with a line type that changes each time the polygram reflection pattern changes on reflection from a tilted mirror, namely:

| $m_n$-star polygram | Line Type |
|---|---|
| n = 1 | Solid |
| n = 2 | Dotted |
| n = 3 | Dot-dashed |
| n = 4 | Dashed |

The cell configurations are summarised as follows:

| | Beam Entry | Tilted Mirror 1 | Tilted Mirror 2 | Tilted Mirror 3 | Beam Exit |
|---|---|---|---|---|---|
| Figure 15 | S0 | S8 | S16 | *none* | S0 |
| Figure 16 | S0 | S8 | S16 | *none* | S13 |
| Figure 17 | S0 | S8 | S16 | S13 | S0 |

The tilted mirrors are labelled in Figures 15 to 17 with a prime. It will be understood that the designs are not limited to any specific number of segments such as the illustrated designs with 23 segments. As previously noted the total number of segments is denoted by p which is an odd number with prime numbers being of particular interest. Example segment numbers include 7, 9, 11, 13, 15, 17, 19, 21, 23, 25, 27, 29, 31, 37, 41, 43, 47, 53, 59, 61, 67, 71, 73, 79, 83, 89, 97, 101, 103, 107, 109, 113, 127, 131, 137, 139, 149, 151, 157, 163, 167, 173, 179, 181, 191, 193, 197 and 199 ... or more.

Conceptually, each tilted mirror segment may be thought of as the origin or seed of a new input beam that has a different input angle compared to the beam incident on the tilted mirror segment. Similarly, each tilted mirror segment may also be thought of conceptually as the output or sink of the incident beam. The total optical path of the cell is then the sum of the paths of multiple different reflection patterns with the number of different reflection patterns corresponding to the number of beam incidences on tilted mirror segments plus one.

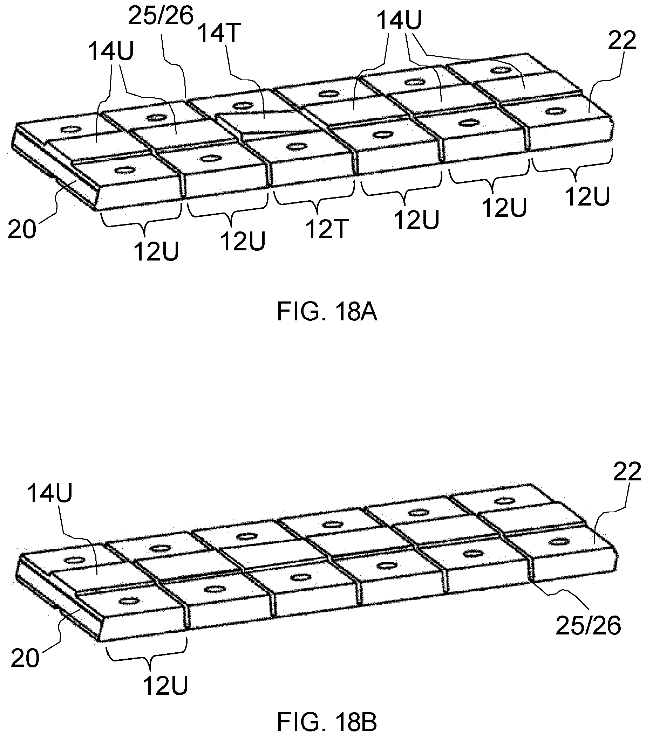

Figure 18A is a schematic perspective view of an SC-MPC according to a tilted mirror segment embodiment which comprises a planar substrate 20 after fabrication of the grooves/hinges 25/26 and the un-tilted and tilted mirrors 14U, 14T, these both being formed on the substrate upper surface 22 to provide un-tilted and tilted mirror segments 12U, 12T. Figure 18B is a corresponding drawing for comparison of an equivalent conventional SC-MPC, i.e., without any tilted mirror segments. In Figure 18A, only one tilted mirror segment 12T is illustrated. It will be understood that further segments can be provided of similar form including at least one further tilted mirror segment. The circles in Figure 18A and Figure 18B schematically indicate threaded holes for receiving screws in order to secure the rolled-up structure to a frame as illustrated in Figure 9 using threaded fasteners.

The tilted mirror segment approach thus allows an SC-MPC to be designed that has a significantly longer OPL within the cell compared to a conventional cell of the same diameter, the longer OPL arising from the fact that some or all of the mirrors reflect the beam multiple times. The beam path that is followed depends on the number of tilted mirror segments, the location(s) of the tilted mirror(s) in the segment sequence, and the tilt angle of the tilted mirror(s). The beam-folding becomes inherently denser compared with a conventional design. With the tilted mirror design, a specific example SC-MPC has a cell diameter of 19 cm cell and p = 101 to provide an OPL of 66 metres at a beam wavelength of 10 $\mu$m. To provide the same OPL in a conventional SC-MPC, the diameter would have to be approximately double. With the tilted mirror design approach, it is possible to realise SC-MPCs having a beam path with several hundred reflections, e.g., between 200 and 400. Of course, the practical consideration of reflectivity losses will still impose a maximum on the number of reflections that can be designed into the SC-MPC. However, with the planar substrate fabrication method according to the invention, enhanced reflectivity values can be attained, for example by allowing precise layer deposition to form dielectric-dielectric or dielectric-metal mirrors, thereby making it possible to exploit the advantages of the tilted mirror design concept more fully. By comparison, with conventional SC-MPC fabrication methods based on using SPDT to mill out the cylindrical cell from a single piece of metal, it is not practically possible to employ precise layer deposition techniques, such as vapour deposition, more specifically chemical vapour deposition (CVD), or other important precision fabrication techniques, such as etching, as used in the semiconductor industry and in precision optical component manufacturing, which makes it more difficult to achieve high mirror reflectivities. Nevertheless, it is also possible to use conventional SC-MPC fabrication methods to manufacture tilted mirror SC-MPCs. Referring to the above mathematical description of a conventional SC-MPC, the tilted mirror concept involves changing the increment $q$ whenever the beam is reflected at a tilted mirror segment.

The mirror segment tilts are defined by $\overrightarrow{\Delta q}$ with length p and entries $\in \mathbb{Z}$. All entries except for those corresponding to the tilted mirror segments are equal to zero. Depending on the mirror tilt angle, the beam is deflected to a segment other than the segment which would follow the same polygram reflection pattern as followed by the beam prior to incidence on the tilted mirror segment, thereby inducing a pattern modification. This additional degree of freedom modifies Eq. 2 such that $q$ becomes variable:

$$q_i = q_{i-1} + \Delta q_{s_{i-1}} \text{ where } \Delta q_{s_i} \in \mathbb{Z} \ \forall s_i \qquad (6)$$

Each time the beam is incident on a tilted mirror segment $s_i$ the next mirror segment is altered by $\Delta q_{s_i}$. Thus, $\Delta q_{s_i} = +1$ denotes a reflection to the nearest neighbour segment in the anticlockwise direction of counting relative to the un-tilted case. More generally, $\Delta q_{s_i} = \pm 1$ denotes a reflection to a nearest neighbour segment and $\Delta q_{s_i} = \pm 2$ denotes reflection to a next nearest neighbour segment. Referring to Figure 15, it can be seen that the first tilted mirror segment S8 causes the beam to be reflected onto segment S17, whereas with an equivalent conventional un-tilted mirror segment (see Figure 1) the beam would be reflected onto segment S19. The effect of the tilted mirror in this example can thus be expressed as $\Delta q_6 = +2$ since the segment arrived at by the beam after reflection from the first tilted mirror is shifted two segments clockwise compared to an un-tilted mirror reflection. The OPL in a tilted mirror segment SC-MPC is still calculated according to Eq. 4 but Eq. 5 no longer holds and $\cos(\vartheta) \approx 1$ is no longer a good approximation, since q can deviate significantly from $p/2$. Rather, Eq. 3 should be used to determine $\vartheta(q_i)$ for each cell traversal. The OPL of a tilted mirror segment SC-MPC can then be found by:

$$OPL = \sum_{i=0}^{N} d \cos \vartheta(q_i) \qquad (7)$$

where $N$ is the total number of reflections.

The new design concept of introducing one or more tilted mirrors to increase the OPL for a given cell diameter opens up a huge number of possible configurations. For example, in the case in which a large proportion of the mirror segments are tilted and each has an arbitrary tilt angle, this would create such a vast number of permutations that it would be impractical to consider them all and the reflection patterns would be arbitrarily complex. Therefore, when designing a tilted mirror SC-MPC, it is helpful to constrain the design options to limit the number of possible candidate configurations to consider.

Adopting the following two design constraints is recommended:

The number of tilted mirror segments should be kept small. Significant advantages from the tilted mirror design can be attained in practice already with 2 tilted mirrors. Exceeding 3 or 4 tilted mirrors is not expected to provide any significant performance advantage so the added design complexity may not be worthwhile.

The tilt angles should be small in the sense that $|\Delta q_{s_i}|$ I is kept small. This avoids larger reflection angles $\vartheta$. Many practical designs can be realised with $|\Delta q_{s_i}| = 1$. Having the limit $|\Delta q_{s_i}| \leq 10$ is advisable even for designs with several hundred segments. Restricting to any of the following specific values can be useful to reduce the number of design permutations: 1, 2, 3, 4, 5, 6, 7, 8, 9 and 10.

Moreover, a further design constraint that can be usefully imposed is that:

$|p/2 - q_i|$ should be kept small for example less than or equal to 10

This constraint limits the output angle from the SC-MPC as well as limiting optical aberrations of the beam at reflections within the cell that would arise if reflection angles became too oblique.

A still further design constraint which can be applied is that the sum of the $\Delta q$ values should be kept low. Specifically, if there are two tilted mirror segments then if their $\Delta q$ values are equal in magnitude and of opposite sign, for example +1 and -1, then this will keep $|p/2 - q_i|$ small.

A minimum angular difference between the input and output beams can be specified as a further design constraint.

MIRROR DIMENSIONS

For a given cell diameter, the maximum number of segments that is supported is limited by the fact that the beam to be reflected has a certain size and there is a requirement that a substantial proportion of the beam power is reflected. In other words, if the mirrors are too small in area, then a proportion of beam power at the periphery of the beam will miss the mirror surface entirely and will represent another source of loss or scatter at each reflection in addition to the reflectivity of the mirror surface. For example, assuming a Gaussian beam intensity profile, a reasonable minimum acceptable mirror diameter is one that matches the diameter of three standard deviations corresponding to capturing 99.46% of the beam intensity on the mirror surface. A symmetric confocal cell design is also assumed, since that minimizes the beam diameter on the mirrors. For any given wavelength ($\lambda$) of the light, the beam diameter on the mirror - corresponding to a fall of intensity of $1/e^2$ from the maximum intensity - is expressed by

$$ w = \sqrt{\frac{d\lambda}{\pi}} \qquad\qquad (8) $$

from which the smallest permissible segment breadth $b$ (and corresponding dimension perpendicular thereto to define mirror diameter) is at least about $8 \cdot w$ if the mirror diameter is set at three standard deviations. If the beam intensity profile is other than Gaussian, then of course the minimum mirror dimensions would need to be calculated differently. It is noted that wavelength is a relevant parameter for determining beam diameter on the mirrors and hence specifying the mirror area needed to capture substantially all of the beam power on the mirror.

Using these considerations, for a given cell diameter, the maximum possible number of segments can be calculated. In practice, some additional margin needs to be added to the calculation to ensure the mirror surfaces are away from the hinge folds in a monolithic construction or the edges of the individual segment pieces in a non-monolithic construction.

MIRROR FABRICATION

The mirror is designed, i.e., specified, to have peak reflectivity at a design wavelength. For example, a reflectivity above 90% at the design wavelength is generally desirable. In particular, mirrors can be manufactured with a reflectivity up to 99% in the mid-infrared using metallic coating, such as Au. The mirror's coating will also have a bandwidth of high reflectivity around the design wavelength, with the reflectivity dropping off above or below the design wavelength. There may be a design tradeoff between peak reflectivity and bandwidth.

The mirror may be made of layers of first and second optical materials with different refractive indices. The first and second optical materials are selected to have different refractive indices, in particular to provide a refractive index contrast large enough (e.g. $\Delta n > 1$) such that only a small number of pairs of layers (e.g. 1, 2, 3, 4 or 5 pairs) is sufficient for achieving a specified reflectivity. Coatings of this kind can be applied by companies who offer optical coating processes as a service at the desired wavelength regions, i.e. visible, NIR, MIR or THz. Example companies are Thorlabs, Edmund Optics, Layertech, Lambda Research Optics, LohnStar Optics, Abrisa Technologies, and AccuCoat.

MIRROR ADJUSTMENT

In the above, it has been implicitly assumed that the tilted mirrors are fixed, i.e., have a constant tilt angle. However, in a design extension, it is possible to mount the tilted mirrors so that their tilt angle is adjustable. With adjustable tilted mirrors there is the added versatility of varying the reflection patterns. Mirror adjustment can be provided to vary the tilt angle by a suitable mechanical mounting, e.g., with precision screws. Moreover, the mirror position can be modulated periodically along its optical axis with a dither using a piezoelectric element to assist optical fringe suppression.

MATERIALS AND PROCESS OPTIONS

Suitable methods for structuring the substrate include: moulding (including embossing), machining with a circular saw, milling, etching (wet or dry), wire-cutting, die-sinking (i.e. spark erosion), and machining (e.g., electrical discharge machining (EDM) and laser micromachining).

Suitable materials for the planar substrate include: substrates as used for semiconductor integrated circuit fabrication, an optical glass, a glass-ceramic material, a metal or alloy, a polymer compound, or a 3D-printable material.

Suitable substrates as used for semiconductor integrated circuit fabrication include: crystalline silicon, crystalline silicon carbide, and sapphire (a crystal form of $Al_2O_3$).

Suitable optical glasses include glasses that are commercially available as flats of sufficiently large area for the segmented circular multipass cell being manufactured, e.g., fused silica glass (synonym fused quartz) which may either be optical grade or non-optical grade (for example GE 124 , NSG OZ (Nippon Silica Glass trade mark), HSQ 100 and HSQ 300 (both Heraeus trade marks), calcium fluoride ($CaF_2$), borosilicate glass, which is a glass type having silica and boron trioxide as the main glass-forming constituents; for example Pyrex (Corning trade mark - $SiO_2$-$B_2O_3$-$Na_2O$-$Al_2O_3$) or DURAN (Schott trade mark), ultra-low expansion glass (ULE) which is a registered trade mark of Corning Incorporated and has silica and less than 10% titanium dioxide as its main glass-forming constituents..

Suitable glass-ceramic materials include Zerodur (Schott trade mark) and Clearceram (Ohara trade mark).

Suitable metals and alloys for the substrate include: aluminium, stainless steel, copper, nickel, brass and invar

Suitable polymer compounds for the substrate include:

- an acrylic polymer material such as polymethylmethacrylate (PMMA),
- styrene ($C_6H_5CH=CH_2$),
- polycarbonate (PC),
- a cyclic-olefin co-polymer (COP and COC) such as Zeonex or Zeonor (both Nippon Zeon K.K trade marks), and TOPAS
- a polyetherimide (PEI) such as Ultem (SABIC Global Technologies B.V. trade mark).

Suitable materials for 3D printing, i.e., to form the planar substrate by 3D printing, include a polymer compoundable material such as polylactic acid (PLA), acrylonitrile butadiene styrene (ABS), or a polyethylene terephthalate (PET) such as PET-glycol (PETG).

REFERENCE NUMERALS

| 10 | SC-MPC |
| 12 | segment |
| 12U | segment bearing an un-tilted mirror |
| 12T | segment bearing a tilted mirror |
| 14 | mirror |
| 14U | un-tilted mirror |
| 14T | tilted mirror |
| 15 | mirror-shaped surface |
| 16 | mirror coating layer(s) |
| 18 | aperture |
| 20 | planar substrate |
| 22 | substrate, upper surface |

| 24 | substrate, lower surface |
| 25 | substrate, hinge-forming groove |
| 26 | hinge |
| 28 | embossing roller |
| 29 | hot plate |
| 30 | supporting frame |

## Claims

1. A method of manufacturing a segmented circular multipass cell (10), the method comprising:

   providing a planar substrate (20) having an upper surface (22) and a lower surface (24);
   applying first surface structure to at least one of the upper surface and the lower surface to subdivide the planar substrate into a plurality of segments (12);
   applying second surface structure on the upper surface to provide respective ones of the segments (12) with mirror-shaped surfaces (15);
   processing the mirror-shaped surfaces (15) on the planar substrate (20) to form mirrors (14); and
   assembling the segments (12) into a closed polygonal geometry with the mirrors (14) facing inwards, thereby to form a segmented circular multipass cell (10).

2. The method of claim 1, wherein the first surface structure is applied by a process selected from the group of at least one of: moulding, sawing, milling, etching, wire-cutting, die-sinking, and machining.

3. The method of claim 1, wherein the second surface structure is applied by a process selected from the group of at least one of: moulding, milling, etching, die-sinking, and machining.

4. The method of claim 1, wherein the first and second surface structures are applied by a process selected from the group of at least one of: moulding, milling, etching, die-sinking, and machining.

5. The method of claim 2, 3 or 4, wherein said moulding comprises softening and embossing the planar substrate (20).

6. The method of any one of the preceding claims, wherein said processing to form the mirrors comprises at least one of:

   coating the planar substrate (20) to apply at least one mirror coating layer (16) to the mirror-shaped surfaces (15);
   polishing the mirror-shaped surfaces (15); and
   machining the mirror-shaped surfaces (15).

7. The method of any one of claims 1 to 6, wherein said first surface structure reduces the thickness of the planar substrate (20) along a plurality of equally spaced parallel strips to form hinges (26) between adjacent segments (12), and wherein said assembling comprises rolling up the planar substrate (20) into the closed polygonal geometry by bending the hinges (26).

8. The method of claim 7, further comprising, after bending the hinges (26) to form the closed polygonal geometry, processing the hinges to render them inflexible so that the segments (12) are fixed in position in the closed polygonal geometry.

9. The method of claim 7 or 8, further comprising securing the rolled-up substrate to a supporting frame (30) in its closed polygonal geometry.

10. The method of any one of claims 1 to 6, further comprising separating the segments (12) into structurally separate pieces prior to said assembling, wherein said assembling comprises individually securing the separate pieces to a supporting frame (30).

11. A segmented circular multipass cell (10) comprising:

    a plurality of p segments (12) arranged in the form of a p-sided polygon;
    an entry aperture (18) arranged in one of the segments (12) through which a light beam can be coupled into the multipass cell at a coupling angle such that the light beam subsequently traverses the multipass cell;

an exit aperture (18) arranged in one of the segments through which the light beam exits the multipass cell after traversal of the multipass cell; and

a plurality of mirrors (14) arranged on the segments (12) that are not associated with the entry and exit apertures (18),

wherein a majority of the mirrors (14) have a conventional alignment in which the mirrors conform to the shape of a p-sided regular polygon, whereas at least two of the mirrors have a tilted alignment, being tilted at a tilt angle with respect to the conventional alignment, said mirrors being referred to respectively as un-tilted and tilted mirrors (14U, 14T), and

wherein the segmented circular multipass cell is configured such that the light beam initially follows an m-star polygram reflection pattern defined by the coupling angle at which the light beam is coupled into the multipass cell through the entry aperture and, subsequently, each time the light beam is reflected from a tilted mirror (14T), the m-star polygram reflection pattern changes to one with a different coupling angle.

12. The segmented circular multipass cell of claim 11, wherein the number of tilted mirrors (14T) is selected from the group: two, three, four and five.

13. The segmented circular multipass cell of claim 11 or 12, wherein each tilted mirror (14T) has a tilt angle to cause the light beam to be reflected onto a nearest neighbour or next nearest neighbour one of the mirrors compared to the mirror which the light beam would have been reflected onto had the light beam continued to follow the polygram reflection pattern it had been describing before incidence on that tilted mirror.

14. The segmented circular multipass cell of any one of claims 11 to 13, wherein, the entry and exit apertures (18) are different apertures arranged in different ones of the segments (12), or the entry and exit apertures (18) are one and the same aperture arranged on the same segment.

15. The segmented circular multipass cell of any one of claims 11 to 14, wherein the mirrors (14) are configured such that the multipass cell is confocal.

FIG. 1

22    20

FIG. 2

22    20    15

FIG. 3

22    25    20    15

26

12    24

FIG. 4

14

26

12    24

FIG. 5

14

22

16

15

20

24

FIG. 6

25/26

20

22

12

14

b

FIG. 7

FIG. 8

FIG. 9

FIG. 10

FIG. 11

FIG. 12A

22

α

26

20

25

$t_s$

$t_h$

24

w

FIG. 12B

22

α

26

20

25

$t_s$

$t_h$

24

FIG. 12C

22

α

26

20

25

$t_h$

$t_s$

α'

24

FIG. 12D

FIG. 12E

FIG. 12F

FIG. 13

FIG. 14

FIG. 15

FIG. 16

FIG. 17

FIG. 18A

FIG. 18B

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/243341 A2 (SI WARE SYSTEMS [US]) 3 December 2020 (2020-12-03) | 1-6,10 | INV. G01N21/03 |
| Y | * paragraph [0061]; figures 7,5 * | 11,12, 14,15 | |
| A | | 7-9,13 | |
| Y | GRAF MANUEL ET AL: "Compact, circular, and optically stable multipass cell for mobile laser absorption spectroscopy", OPTICS LETTERS, vol. 43, no. 11, 16 May 2018 (2018-05-16), page 2434, XP093246247, US ISSN: 0146-9592, DOI: 10.1364/OL.43.002434 | 11,12, 14,15 | |
| A | * page 2437, left-hand column, lines 45-46; figure 1 * * page 2435, lines 35-37 * | 7-9,13 | |
| A | WO 2016/118431 A1 (ENTEGRIS INC [US]) 28 July 2016 (2016-07-28) * figures 1-5,7-11 * | 1-15 | |
| A | WO 02/068929 A2 (ION OPTICS INC [US]) 6 September 2002 (2002-09-06) * figures 1-3 * | 1-15 | TECHNICAL FIELDS SEARCHED (IPC) G01N |
| A | US 2022/170851 A1 (TRÖLLSCH ARNE [DE]) 2 June 2022 (2022-06-02) * figures 1,2 * | 1-15 | |
| Y | WO 2019/007175 A1 (XUZHOU XUHAI OPTO ELECTRONIC TECH CO LTD [CN]) 10 January 2019 (2019-01-10) | 11,12, 14,15 | |
| A | * paragraphs [0139] - [0140]; figures 10,12 * | 7-9,13 | |

-/--

The present search report has been drawn up for all claims

| Place of search | Date of completion of the search | Examiner |
|---|---|---|
| Munich | 19 February 2025 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/227327 A1 (MCNEAL MARK P [US] ET AL) 12 October 2006 (2006-10-12) * figures 4,6,8 * | 1-15 | |
| A | CN 215 448 964 U (JIANGYIN YAYUN ELECTRONIC TECH CO LTD) 7 January 2022 (2022-01-07) * figure 1 * | 1-15 | |
| A | WO 2017/182793 A1 (CASCADE TECH HOLDINGS LTD [GB]) 26 October 2017 (2017-10-26) * page 14, lines 5-12; figure 4 * | 1-15 | |

TECHNICAL FIELDS
SEARCHED      (IPC)

The present search report has been drawn up for all claims

| Place of search | Date of completion of the search | Examiner |
|---|---|---|
| Munich | 19 February 2025 | Meacher, David |

EPO FORM 1503 03.82 (P04C01)

## EP 4 707 779 A1

### ANNEX TO THE EUROPEAN SEARCH REPORT
### ON EUROPEAN PATENT APPLICATION NO.

EP 24 19 9473

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | Publication date | Patent family member(s) | | Publication date |
|---|---|---|---|---|---|
| WO 2020243341 | A2 | 03-12-2020 | EP | 3977095 A2 | 06-04-2022 |
| | | | US | 2020378892 A1 | 03-12-2020 |
| | | | WO | 2020243341 A2 | 03-12-2020 |
| WO 2016118431 | A1 | 28-07-2016 | CN | 107250764 A | 13-10-2017 |
| | | | CN | 115452724 A | 09-12-2022 |
| | | | JP | 6450850 B2 | 09-01-2019 |
| | | | JP | 2018509598 A | 05-04-2018 |
| | | | KR | 20170103955 A | 13-09-2017 |
| | | | TW | 201629658 A | 16-08-2016 |
| | | | US | 2018011003 A1 | 11-01-2018 |
| | | | WO | 2016118431 A1 | 28-07-2016 |
| WO 02068929 | A2 | 06-09-2002 | AU | 2002306560 A1 | 12-09-2002 |
| | | | US | 2002185603 A1 | 12-12-2002 |
| | | | WO | 02068929 A2 | 06-09-2002 |
| US 2022170851 | A1 | 02-06-2022 | AU | 2017315603 A1 | 14-03-2019 |
| | | | CN | 109564153 A | 02-04-2019 |
| | | | DE | 102016010088 A1 | 01-03-2018 |
| | | | EP | 3504535 A1 | 03-07-2019 |
| | | | US | 2019195787 A1 | 27-06-2019 |
| | | | US | 2022170851 A1 | 02-06-2022 |
| | | | WO | 2018036650 A1 | 01-03-2018 |
| WO 2019007175 | A1 | 10-01-2019 | CN | 109212733 A | 15-01-2019 |
| | | | CN | 109477953 A | 15-03-2019 |
| | | | WO | 2019007175 A1 | 10-01-2019 |
| US 2006227327 | A1 | 12-10-2006 | NONE | | |
| CN 215448964 | U | 07-01-2022 | NONE | | |
| WO 2017182793 | A1 | 26-10-2017 | CN | 107305183 A | 31-10-2017 |
| | | | EP | 3446097 A1 | 27-02-2019 |
| | | | JP | 2019515256 A | 06-06-2019 |
| | | | JP | 2022058585 A | 12-04-2022 |
| | | | RU | 2018139645 A | 20-05-2020 |
| | | | US | 2017307519 A1 | 26-10-2017 |
| | | | WO | 2017182793 A1 | 26-10-2017 |

EPO FORM P0459

For more details about this annex : see Official Journal of the European Patent Office, No. 12/82

31

**EP 4 707 779 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. TUZSON et al.** Compact multipass optical cell for laser spectroscopy. *Optics Letters*, 2013, vol. 38 (3)
- **B. TUZSON et al.** A compact QCL spectrometer for mobile, high-precision methane sensing aboard drones. *Atmos. Meas. Tech.*, 2020, vol. 13
- **M. GRAF et al.** Compact and lightweight mid-infrared laser spectrometer for balloon-borne water vapor measurements in the UTLS. *Atmos. Meas. Tech.*, 2021, vol. 14
- **M. GRAF et al.** Compact, circular, and optically stable multipass cell for mobile laser absorption spectroscopy. *Optics Letters*, 2018, vol. 3 (11)
- **DESHMUKH, SWARUP ; GOSWAMI, ARJYAJYOTI.** Current innovations in roller embossing-a comprehensive review.. *Microsystem Technologies.*, 2022, vol. 28, 1-38